(19) **Europäisches Patentamt**

**European Patent Office**

**Office européen des brevets**

(11) **EP 0 601 437 B1**

(12) **EUROPÄISCHE PATENTSCHRIFT**

(45) Veröffentlichungstag und Bekanntmachung des Hinweises auf die Patenterteilung:
**13.10.1999 Patentblatt 1999/41**

(51) Int Cl.6: **H04B 1/66**, G11B 20/10

(21) Anmeldenummer: **93119246.2**

(22) Anmeldetag: **30.11.1993**

(54) **Verfahren zur kompatiblen Übertragung und/oder Speicherung und Decodierung eines Zusatzsignals**

Method for compatible transmission and/or decoding and storage of an auxiliary signal

Procédé de transmission compatible et/ou de décodage et de stokage d'un signale auxilliaire

(84) Benannte Vertragsstaaten:
**DE ES FR GB IT PT**

(30) Priorität: **05.12.1992 DE 4241068**

(43) Veröffentlichungstag der Anmeldung:
**15.06.1994 Patentblatt 1994/24**

(73) Patentinhaber: **DEUTSCHE THOMSON-BRANDT GMBH**
**78048 Villingen-Schwenningen (DE)**

(72) Erfinder: **Spille, Jens**
**D-30880 Laatzen (DE)**

(74) Vertreter: **Hartnack, Wolfgang, Dipl.-Ing.**
**Deutsche Thomson-Brandt GmbH**
**Licensing & Intellectual Property,**
**Karl-Wiechert-Alee 74**
**30625 Hannover (DE)**

(56) Entgegenhaltungen:
EP-A- 0 209 047        EP-A- 0 523 452
EP-A- 0 540 330        WO-A-93/15562
AT-B- 73 252           DE-A- 4 111 855

## Beschreibung

Die Erfindung betrifft Verfahren zur kompatiblen Übertragung und/oder Speicherung und Decodierung eines Zusatzsignals in/mit einem digitalen Tonsignal.

### Stand der Technik

Für manche Anwendungen ist es erforderlich, ein Zusatzsignal zusätzlich zu einem Tonsignal derart zu übertragen, daß das Zusatzsignal vom Tonsignal nicht einfach trennbar, jedoch getrennt auswertbar und bei der Tonwiedergabe nicht hörbar ist und auch ansonsten keine Beeinträchtigung der subjektiven Qualität der Tonwiedergabe bewirkt. In DE-A-3806411 und in IEEE INTERNATIONAL CONFERENCE ON SYSTEMS ENGINEERING, 17. September 1992, NEW YORK (US), Seiten 467-472, J. Kuusama et al., CAPACITY AND PROPERTIES OF SLAVE MODE HIDDEN CHANNEL CODING, wird ein Zusatzsignal innerhalb einer Frequenzgruppe des Tonsignals mit einem gegenüber dem jeweiligen Pegel des Tonsignals in dieser Frequenzgruppe so geringem Pegel zugesetzt oder übertragen, daß es bei der Wiedergabe aufgrund psycho-akustischer Verdeckungseffekte nicht hörbar ist. Bezüglich des Gegenstands des ersten Dokuments hat sich jedoch herausgestellt, daß die Übertragung der Zusatzsignale innerhalb einer Frequenzgruppe zusammen mit den Tonsignalen äußerst umständlich und fehleranfällig ist. Beim Gegenstand des zweiten Dokuments werden statt der LSBs der Audio-Abtastwerte die Zusatzinformationen übertragen.

### Erfindung

Der Erfindung liegt die Aufgabe zugrunde, diese Nachteile zu vermeiden und ein zu bisher vorgeschlagenen Audio-Standard-Codierverfahren kompatibles Verfahren zur Übertragung und Speicherung eines digitalen Tonsignals und eines digitalen Zusatzsignals anzugeben. Diese Aufgabe wird durch die in den Ansprüchen 1 und 2 angegebenen Verfahren gelöst.
Die Erfindung beruht auf folgender Überlegung: Gemäß dem MPEG Audio-Standard (ISO/IEC Coding of Moving Pictures and Associated Audio) zur Codierung von Audiosignalen (und anderer Codierverfahren) wird ein digitales Audiosignal vor der Codierung in mehrere Frequenzbereiche (Teilbänder, subbands) aufgeteilt und diese separat codiert. In dem Bitstrom des digitalisierten Audiosignals ist eine Bit-Allocation-Information angeordnet, die einem Decoder mitteilt, wieviel Bits pro Teilband zugeteilt werden. Weiterhin gibt es eine Skalenfaktor-Information, die die Lautstärke des Teilbandes festlegt.
Teilt man nun einem bestimmten Teilband, z.B. dem frequenzmäßig höchsten Band (SB limit), über die Bit-Allocation-Information 16Bit als Abtastwert-Anzahl zu und setzt dabei gleichzeitig über die Skalenfaktor-Information die Lautstärke dieser Abtastwerte auf -118db, so entsteht hier ein praktisch nicht hörbarer Datenkanal. Dieser zusätzliche Kanal kann vorteilhaft variabel alle 24ms angepaßt werden und kann Daten aller Art, auch andere Audiodaten (z.B. Sprache) aufnehmen. Dabei entsteht praktisch ein Zusatz-Datenkanal mit einer Kapazität von

$$48000 \text{samples/s} / 32 \text{subbands} * 16 \text{bit/subband} = 24 \text{kBit/s},$$

der bezüglich eines MPEG-Datenstroms praktisch untrennbar mit dem digitalen Tonsignal verbunden ist. In MPEG können je nach Mode auch andere Subband-Zahlen, z.B. 27, verwendet werden, wobei dann auch mehrere Subbands für die Übertragung des Zusatzsignals ausgenutzt werden können.
Je nach Übertragungsmedium kann zusätzlich ein entsprechender Fehlerschutz vorgenommen werden.
Der Vorteil des erfindungsgemäßen Übertragungsverfahrens besteht zum einen darin, daß es kompatibel ist zum obengenannten MPEG-Audio-Standard. Dabei macht sich die Erfindung die Erkenntnis zu nutze, daß Audiosignale in den höchsten Frequenzstufen kaum oder gar nicht von einem Hörer wahrgenommen werden und dies vor allem dann, wenn wie in einem Fahrzeug ohnehin störende Außengeräusche den Musikgenuß beeinträchtigen.
Erfindungsgemäß wird somit nicht nur ein weiterer Übertragungskanal im MPEG-Bitstrom geschaffen, sondern dieser Kanal ist auch versteckt im Tonsignal-Bitstrom angeordnet und somit nur schwer bzw. nicht unbeabsichtigt entfernbar. Daher kann dieser Zusatzdaten-Übertragungskanal zu Identifikations- oder Steuerungszwecken aller Art verwendet werden, insbesondere auch zur Decodier-Sperrung oder als Kanal zur Steuerung von dynamischen Funktionen im Audiosignal (z.B. im Empfänger einstellbare variable Dynamik analog zu den vom Institut für Rundfunktechnik, München gemachten Vorschlägen zur Einführung einer variablen Dynamik beim UKW-Rundfunk).
Die Erfindung läßt sich auch bei der Speicherung auf einem Speichermedium realisieren, indem einem Speicher ein entsprechender Zusatzdaten-Speicher zugeordnet wird.
Im Prinzip besteht daß erfindungsgemäße Verfahren in einer kompatiblen Übertragung und/oder Speicherung und Decodierung eines Zusatzsignals innerhalb eines Tonsignals, welches bei der Wiedergabe des Tonsignals nicht hörbar und vom Tonsignal getrennt auswertbar ist, wobei dem Tonsignal eine Lautstärke-Information zugeordnet ist und wobei:

- das Tonsignal und das Zusatzsignal sind digital und durch die Lautstärke-Information, die eine Skalenfaktor-Information sein kann und einen festgelegten Wert hat, ist der Pegel des Zusatzsignals bei der Wiedergabe des Tonsignals so abgesenkt, daß das Zusatzsignal nicht hörbar ist;

- im Fall von teilband-codierten Tonsignalen wird das Zusatzsignal in einem Subband - insbesondere dem für die höchsten Frequenzen - anstele des entsprechenden Tonsignal-Anteils übertragen und/oder gespeichert, wobei dem kombinierten Tonsignal zumindest für das Zusatzsignal ebenfalls eine Bit-Allocation-Information zugeordnet ist und bei der Decodierung das Zusatzsignal mit Hilfe dieser Bit-Allocation-Information aus dem kombinierten Tonsignal wiedergewonnen wird;

- im Fall von breitband-codierten Tonsignalen wird das Zusatzsignal in Modulationspausen des Tonsignals übertragen und/oder gespeichert bzw. decodiert.

Vorteilhafte Weiterbildungen des erfindungsgemäßen Verfahrens ergeben sich aus den zugehörigen abhängigen Ansprüchen.

Zeichnungen

Anhand der Zeichnungen sind Ausführungs-Beispiele der Erfindung beschrieben. Diese zeigen in:

Fig. 1      Frequenzbänder eines Tonsignals;
Fig. 2      Blockdiagramm eines erfindungsgemäßen Zusatzsignal-Übertragungs-Systems.

Ausführungs-Beispiele

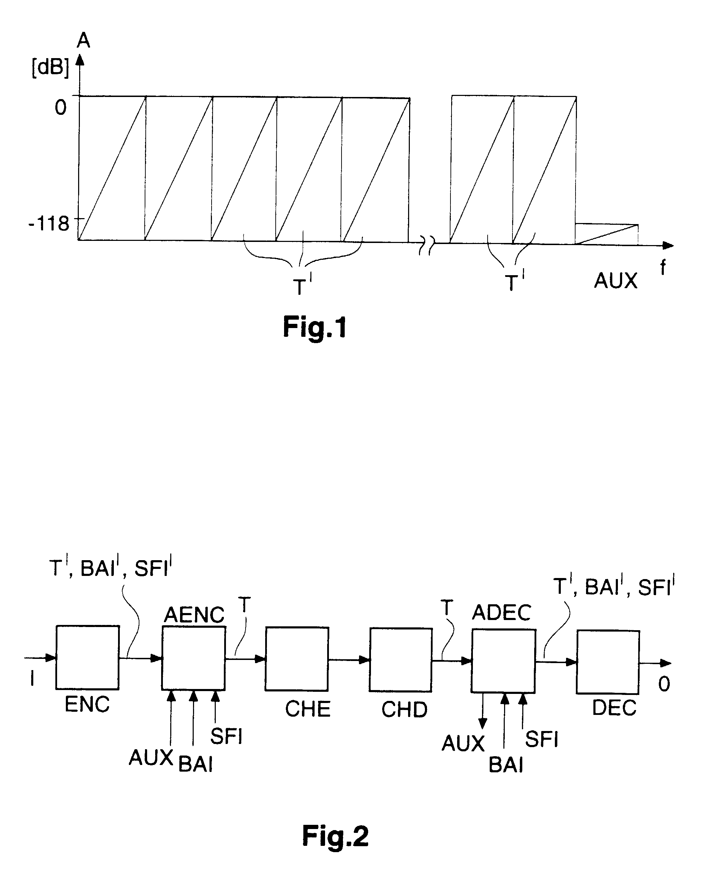

In Fig. 1 sind die Frequenzbänder für ein digitales Tonsignal TORG dargestellt. Dieses Tonsignal besteht aus dem Tonsignal T', bei dem gegenüber TORG z.B. das höchstfrequente Frequenzband gekappt wurde, und aus dem Zusatzsignal AUX, welches an Stelle des höchstfrequenten Frequenzbands von TORG übertragen wird. Die Amplituden in den Frequenzbändern von T' können bis an 0dB (volle Amplitude) heranreichen. Die maximale Amplitude des Zusatzsignals AUX ist z.B. auf -118dB begrenzt.

In Fig. 2 wird ein Eingangssignal I (entspricht TORG) in einem digitalen Encoder ENC codiert und ein digitales Tonsignal T', eine Bit-Allocation-Information BAI' und eine Skalenfaktor-Information SFI' seriell oder parallel ausgegeben. Diese Ausgangssignale gelangen über einen Zusatzsignal-Encoder AENC als Gesamt-Tonsignal T zusammen mit einer modifizierten Bit-Allocation-Information und einer modifizierten Skalenfaktor-Information zu einem Kanal-Encoder CHE, der eine Kanalmodulation durchführt und eventuell einen Fehlerschutz hinzufügt, und dessen Ausgangssignal übertragen oder gespeichert wird.

Ein nachfolgender Kanal-Decoder CHD übernimmt die Kanal-Demodulation und eine eventuelle Fehlerkorrektur. Das Ausgangssignal gelangt über einen Zusatzsignal-Decoder ADEC zu einem digitalen Decoder DEC, der wieder das decodierte Tonsignal O zur Verfügung stellt. CHE und CHD sind bekannte Schaltungen, die z. B. eine 8/10 (De)Modulation beinhalten. Der Zusatzsignal-Encoder AENC setzt für das dem Zusatzsignal AUX zugeordnete Frequenzband die Werte BAI und SFI neu fest (s. obengenannte Beispiel-Werte) und fügt das Zusatzsignal AUX in die entsprechende Stelle des Datenstroms ein. Der Zusatzsignal-Decoder ADEC hat die zu AENC entsprechend inverse Funktion und separiert aus dem Gesamt-Datenstrom das Zusatzsignal AUX.

Für ENC und DEC können auf dem Markt befindliche Geräte oder PC boards verwendet werden:

- Telos Zephyr, ISO/MPEG Layer-III transceiver, Telos Systems, Cleveland, OH, USA;
- MusicTAXI Type 3, ISO/MPEG Layer-II and/or-III encoder/decoder, System Engineering GmbH, Ludwigsburg, DE;
- PC LAYER-III Card, Fraunhofer-Gesellschaft, DE.

In Fig. 2 sind AENC und ADEC als nach- bzw. vorgeschaltete Einheiten dargestellt. Tatsächlich sind diese Schaltungen Bestandteile von ENC bzw. DEC, wobei ENC das Signal T zusammen mit der modifizierten Bit-Allocation-Information und der modifizierten Skalenfaktor-Information liefert und DEC diese Signale empfängt.

Die Erfindung kann ebenso bei der PASC-Codierung von Philips und bei der ATRAC-Codierung von Sony sowie bei DAB, DCC und MiniDisc eingesetzt werden.

In Breitband-Codierverfahren wie z.B. NICAM kann die Erfindung in Modulations-Pausen des digitalen Tonsignals verwendet werden. Auf die Bit-Allocation-Information und ihre Auswertung kann dann verzichtet werden. Die Erfindung kann allgemein dort eingesetzt werden, wo Informationen in der Form Mantisse/zugehöriger Exponent vorliegen und ein Zusatzsignal mit geringem Pegel nicht störend wirkt. BAI entspricht dann der Genauigkeit der Mantisse und SFI dem Exponenten.

**Patentansprüche**

1.    Verfahren zur kompatiblen Übertragung oder Speicherung oder Decodierung eines digitalen Zusatzsignals (AUX) innerhalb eines digitalen Tonsignals (T), welches bei der Wiedergabe (DEC) des Tonsignals nicht hörbar und vom Tonsignal getrennt auswertbar (ADEC) ist, wobei das Tonsignal (T') subband-codiert ist und dem Tonsignal eine Lautstärke-Information (SFI) zugeordnet (AENC) ist, die eine Skalenfaktor-Information sein kann und die einen festgelegten Wert hat, durch den der Pegel des Zusatzsignals bei der Wiedergabe (DEC) des Tonsignals so abgesenkt wird, daß das Zusatzsignal nicht hörbar ist und wobei das Zusatzsignal (AUX) in einem Subband übertragen oder gespeichert oder decodiert wird und dem mit dem Zusatzsignal kombinierten Tonsignal zumindest für das Zusatzsignal eine Bit-Allocation-Information (BAI) zugeordnet ist und bei der Decodierung das Zusatzsignal mit Hilfe dieser Bit-Allocation-Information aus dem kombinierten Tonsignal wiedergewonnen wird, dadurch **gekennzeichnet,** daß in dem Subband, insbesondere in dem für die höchsten Frequenzen, in dem das Zusatzsignal übertragen wird, das Tonsignal nicht übertragen wird, und daß der so gebildete weitere Kanal nur schwer bzw. nicht unbeabsichtigt entfernbar ist.

2. Verfahren zur kompatiblen Übertragung oder Speicherung oder Decodierung eines digitalen Zusatzsignals (AUX) innerhalb eines digitalen Tonsignals (T), welches bei der Wiedergabe (DEC) des Tonsignals nicht hörbar und vom Tonsignal getrennt auswertbar (ADEC) ist, wobei dem Tonsignal eine Lautstärke-Information (SFI) zugeordnet (AENC) ist, die eine Skalenfaktor-Information sein kann und die einen festgelegten Wert hat, durch den der Pegel des Zusatzsignals bei der Wiedergabe (DEC) des Tonsignals so abgesenkt wird, daß das Zusatzsignal nicht hörbar ist, dadurch **gekennzeichnet**, daß das digitale Tonsignal ein breitband-codiertes Tonsignal ist und daß das Zusatzsignal (AUX) in Modulationspausen des Tonsignals übertragen oder gespeichert oder decodiert wird und daß der so gebildete weitere Kanal nur schwer bzw. nicht unbeabsichtigt entfernbar ist.

3. Verfahren nach Anspruch 1 oder 2, bei dem das Zusatzsignal (AUX) zur Identifikation des Tonsignals oder zur Steuerung von Funktionen dient, insbesondere für eine variable, vom Decoder zu wählende Dynamik oder für eine Zugriffsberechtigung.

4. Verfahren nach einem der Ansprüche 1 bis 3, bei dem das Zusatzsignal zur Speicherung versteckter Zusatzdaten auf einem Speichermedium dient.

## Claims

1. Method for the compatible transmission or storage or decoding of a digital auxiliary signal (AUX) within a digital audio signal (T) which is not audible during the reproduction (DEC) of the audio signal and can be evaluated (ADEC) separately from the audio signal, the audio signal (T') being subband-encoded and a loudness information item (SFI) being allocated (AENC) to the audio signal, which loudness information item can be a scale factor information item and has a fixed value by means of which the level of the auxiliary signal is lowered during the reproduction (DEC) of the audio signal so that the auxiliary signal is not audible, and the auxiliary signal (AUX) being transmitted or stored or decoded in a subband and a bit allocation information item (BAI) being allocated, at least for the auxiliary signal, to the audio signal combined with the auxiliary signal and the auxiliary signal being recovered from the combined audio signal with the aid of this bit allocation information item during the decoding, characterized in that the audio signal is not transmitted in the subband, especially in that for the highest frequencies in which the auxiliary signal is transmitted, and that the further channel thus formed can only be removed with difficulty or, respectively, not unintentionally.

2. Method for the compatible transmission or storage or decoding of a digital auxiliary signal (AUX) within a digital audio signal (T) which is not audible during the reproduction (DEC) of the audio signal and can be evaluated (ADEC) separately from the audio signal, a loudness information item (SFI), which can be a scale factor information item and has a fixed value by means of which the level of the auxiliary signal is lowered during the reproduction (DEC) of the audio signal so that the auxiliary signal is not audible, is allocated (AENC) to the audio signal, characterized in that the digital audio signal is a broadband-encoded audio signal and that the auxiliary signal (AUX) is transmitted or stored or decoded in modulation gaps of the audio signal and that the further channel thus formed can only be removed with difficulty or, respectively, not unintentionally.

3. Method according to Claim 1 or 2, in which the auxiliary signal (AUX) is used for identifying the audio signal or for controlling functions, particularly for a variable dynamic range to be selected by the decoder or for an access authorization.

4. Method according to one of Claims 1 to 3, in which the auxiliary signal is used for storing hidden auxiliary data on a storage medium.

## Revendications

1. Procédé de transmission compatible ou de stockage ou de décodage d'un signal auxiliaire numérique (AUX) dans un signal audio numérique (T) qui est lisible séparément et n'est pas audible (ADEC) lors de la reproduction (DEC) du signal audio, où le signal audio (T') est codé sur sous-bande et une information relative à l'intensité sonore (SFI), qui peut être une information relative au facteur de cadrage et possède une valeur déterminée qui abaisse le niveau du signal auxiliaire lors de la reproduction (DEC) du signal audio de manière à ce que le signal auxiliaire soit inaudible, est associée (AENC) au signal audio et où le signal auxiliaire (AUX) est transmis, stocké ou décodé dans une sous-bande et une information d'allocation de bits (BAI) est associée au signal audio combiné au signal auxiliaire, au minimum pour le signal auxiliaire et lors du décodage, le signal auxiliaire est extrait du signal audio combiné à l'aide de cette information d'allocation de bits, **caractérisé en ce que** le signal audio n'est pas transmis dans la sous-bande, en particulier dans la sous-bande des UHF dans laquelle le signal auxiliaire est transmis **et en ce que** l'autre canal ainsi créé ne peut que difficilement voire pas du tout être écarté sans surveillance.

2. Procédé de transmission compatible ou de stockage ou de décodage d'un signal auxiliaire numérique (AUX) dans un signal audio numérique (T) qui est lisible séparément et n'est pas audible (ADEC) lors de la reproduction (DEC) du signal audio, où une information relative à l'intensité sonore (SFI), qui peut être une information relative au facteur de cadrage et possède une valeur déterminée qui abaisse le niveau du signal auxiliaire lors de la reproduction (DEC) du signal audio de manière à ce que le signal auxiliaire soit inaudible, est associée (AENC) au signal audio, **caractérisé en ce que** le signal audio numérique est un signal audio codé sur sous-bande **et en ce que** le signal auxiliaire (AUX) est transmis, stocké ou décodé dans des intervalles de modulation **et en ce que** l'autre canal ainsi créé ne peut que difficilement voire pas du tout être écarté sans surveillance.

3. Procédé conforme à la revendication 1 ou 2, où le signal auxiliaire (AUX) sert à identifier le signal audio ou à commander les fonctions, en particulier pour un taux de volume variable devant être sélectionné par le décodeur, ou pour une autorisation d'accès.

4. Procédé conforme à l'une des revendications 1 à 2, où le signal auxiliaire sert à stocker sur un support d'enregistrement des données auxiliaires cachées.

**Fig.1**

**Fig.2**